Europäisches Patentamt

European Patent Office

Office européen des brevets

(11) Veröffentlichungsnummer: **0 034 203**

**A1**

(12) # EUROPÄISCHE PATENTANMELDUNG

(21) Anmeldenummer: **80106697.8**

(51) Int. Cl.³: **B 29 F 1/00**

(22) Anmeldetag: **31.10.80**

(30) Priorität: **16.02.80 DE 3005812**

(43) Veröffentlichungstag der Anmeldung:
**26.08.81 Patentblatt 81/34**

(84) Benannte Vertragsstaaten:
**AT FR GB IT NL SE**

(71) Anmelder: **Josef Krauss Maschinenfabrik GmbH**
**Olpener Strasse 387**
**D-5000 Köln 91(DE)**

(72) Erfinder: **Bergfeld, Werner**
**Thieboldsgasse 88**
**D-5000 Köln 1(DE)**

(74) Vertreter: **Radünz, Ingo**
**Schumannstrasse 100**
**D-4000 Düsseldorf 1(DE)**

(54) Spritzgiessmaschine.

(57) Die Spritzgießmaschine weist eine Spritzeinheit (11) und eine waagerechte liegende Schließeinheit (1) auf, die übereinander angeordnet sind, wobei deren Achsen einen Winkel von 0 bis 15° miteinander bilden. Die Austrittsöffnung (15) der Spritzeinheit (11) ist durch einen beheizten Umlenkkanal (19) mit einer in der Formenebene liegenden Ausstoßöffnung (23) verbunden.

EP 0 034 203 A1

Croydon Printing Company Ltd

Fig.1

Spritzgießmaschine

Die Erfindung betrifft eine Spritzgießmaschine mit einer Spritzeinheit und einer waagerecht angeordneten Schließeinheit.

Bei bekannten Spritzgießmaschinen für die Herstellung von Kunststoffteilen liegen die Spritzeinheit und die Schließeinheit in der gleichen Ebene hintereinander. Eine solche Anordnung erfordert bei waagerechter Aufstellung eine verhältnismäßig große Aufstellfläche. Es ist weiterhin bekannt, eine der Einheiten senkrecht vorzusehen. Dadurch wird zwar an Aufstellfläche gespart, jedoch wird die Bauhöhe erhöht, was ebenfalls in vielen Fällen ungünstig ist.

Der Erfindung liegt die Aufgabe zugrunde, unter Beibehaltung der Konstruktionselemente den Raumbedarf der Spritzgießmaschine zu senken.

Die Aufgabe wird erfindungsgemäß dadurch gelöst, daß die Schließeinheit und Spritzeinheit übereinander angeordnet sind, wobei deren Achsen einen Winkel von 0 bis 15$^\circ$ bilden und daß die Austrittsöffnung der Spritzeinheit durch einen beheizten Umlenkkanal mit einer in der Formebene liegenden Ausstoßöffnung verbunden ist.

Durch diese Anordnung kann die Hälfte der Aufstellfläche gespart werden, ohne daß die Bauhöhe nennenswert erhöht wird. Dabei können die meisten Konstruktionseinheiten, die in der bisherigen Bauweise eingesetzt werden, für die erfindungsgemäßen Spritzgießmaschinen übernommen werden.

Eg

Zwei Ausführungesbeispiele der Erfindung sind in der
Zeichnung dargestellt und werden im folgenden näher
erläutert. Es zeigen:

Fig. 1 die Seitenansicht einer erfindungsgemäß ausgebildeten Spritzgießmaschine,

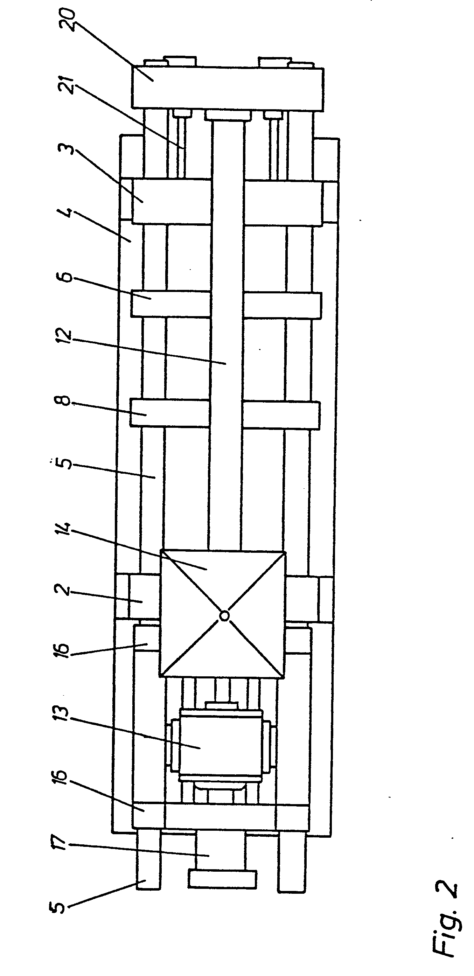

Fig. 2 die Draufsicht auf Fig. 1 und

Fig. 3 in Seitenansicht eine andere Ausführungsform der
Erfindung.

Die dargestellten Spritzgießmaschinen zur Herstellung von
Kunststoffteilen weisen eine waagerecht angeordnete
Schließeinheit 1 auf. Die Schließeinheit 1 besteht aus
einer Kopfplatte 2 und einer feststehenden Formaufspannplatte 3, die fest auf einem Maschinenständer 4 angeordnet
sind. In diesen beiden Platten sind zylindrische Führungsholme 5 gehalten. Auf den Führungsholmen 5 gleiten eine
bewegliche Formaufspannplatte 6 und im dargestellten Fall
eine Zwischenplatte 8, auf die bewegliche Formaufspannplatte 3 über Zwischenstücke 7 abgestützt ist.

Die beiden Formaufspannplatten 3 und 6 nehmen die beiden
Hälften einer nicht dargestellten Spritzgießform auf.
Ein an der Kopfplatte 2 abgestützter Schließzylinder 9
wirkt über die Zwischenplatte 8 und die Zwischenstücke 7
auf die bewegliche Formaufspannplatte 6 und drückt diese
gegen die feststehende Formaufspannplatte 3. Für den
schnelleren Öffnungsvorgang ist ein Zufahrzylinder 10
vorgesehen, der ebenfalls an die Zwischenplatte 8 angreift.

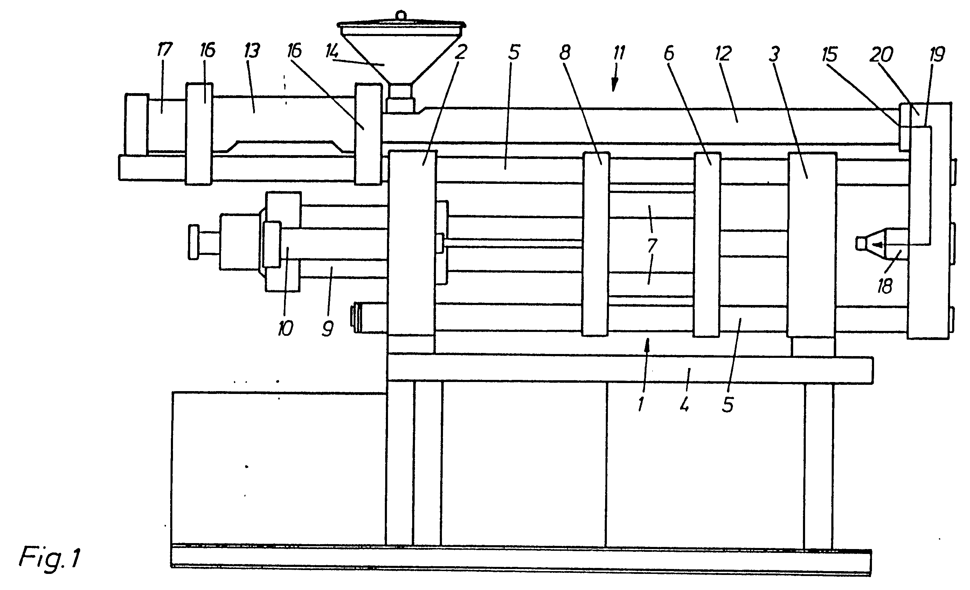

Die Spritzeinheit 11 der Spritzgießmaschine ist oberhalb der Schließeinheit 1 angeordnet. Nach Figur 1 liegt die Achse der Spritzeinheit 11 waagerecht und verläuft somit parallel zur Achse der Schließeinheit 1. Die Spritzeinheit 11 weist einen Massezylinder 12 auf, in dem eine nicht dargestellte Schnecke gedreht wird. Der Antrieb der Schnecke erfolgt über ein Getriebe 13. Dem Massezylinder 12 wird über einen Materialbehälter 14 Kunststoffgranulat zugeführt. Mit Hilfe von nicht dargestellten Heizeinrichtungen, die den Massezylinder 12 von außen umgeben, wird der Kunststoff während seines Transportes durch den Massezylinder 12 bis zur Austrittsöffnung 15 erwärmt und dabei verflüssigt.

Das Getriebe 13 ist in einem Spritzaggregatschlitten 16 gehalten, der auf einer rückwärtigen Verlängerung der Führungsholme 5 verschiebbar ist. An dem Spritzaggregatschlitten 16 ist ein Spritzdruckzylinder 17 befestigt, dessen Kolbenstange auf die Masseschnecke innerhalb des Massezylinders 12 wirkt.

Die Verschlußdüse 18 ist in der Formebene angeordnet. Sie ist über einen beheizten Umlenkkanal 19 mit der Austrittsöffnung 15 des Massezylinders 12 verbunden. Der Umlenkkanal 19 ist durch eine Kanalplatte 20 geführt. Die Kanalplatte 15 nimmt das vordere Ende des Massezylinders 12 auf und ist mit den Führungsholmen 5 verbunden. Die Beheizung des Umlenkkanales 19 erfolgt durch Heizpatronen, die durch Bohrungen in der Kanalplatte 20 geführt sind. Zum festen Andrücken der Verschlußdüse 18 gegen die in der feststehenden Formaufspannplatte 3 befestigte Spritzgießform dienen Andrückzylinder 21. Diese Andrückzylinder 21 sind zur Verkürzung der Baulänge zwischen der Kanalplatte 20 und der feststehenden Formaufspannplatte 3 angeordnet.

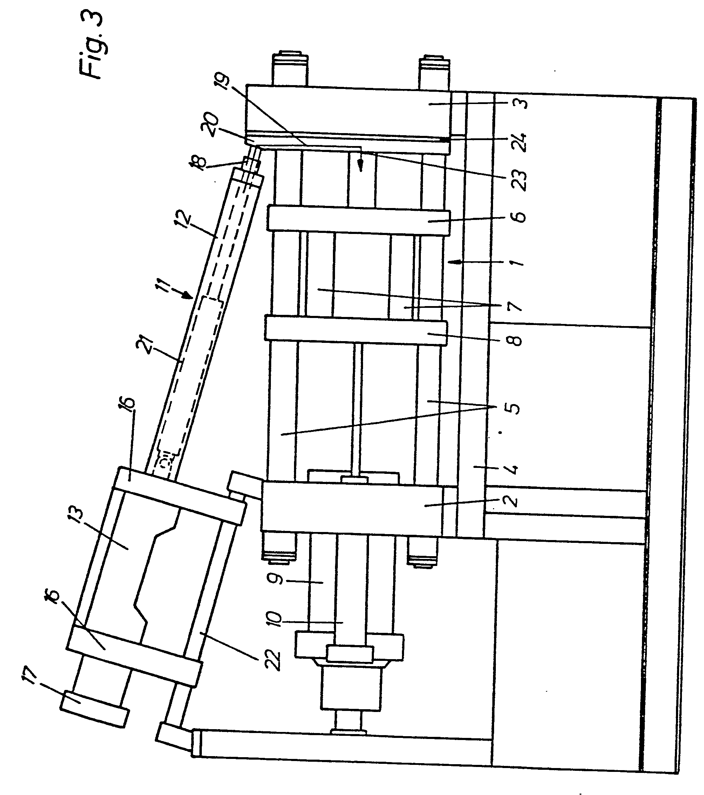

Bei der in Fig. 3 dargestellten Spritzgießmaschine ist die Spritzeinheit 11 ebenfalls oberhalb der waagerecht angeordneten Schließeinheit 1 vorgesehen. Jedoch ist hier die Spritzeinheit 11 schräg angeordnet, wobei die Achsen der Schließeinheit 1 und der Spritzeinheit 11 einen Winkel von etwa 15$^\circ$ miteinander bilden. Die Spritzaggregatschlitten 16 sind auf Führungsstangen 22 angeordnet, die sich auf die Kopfplatte 2 und den Maschinenrahmen 4 abstützen.

Nach Fig. 3 ist die Verschlußdüse 18 am Ende des schräggestellten Massezylinders 12 angeordnet. Über den beheizten Umlenkkanal 19 ist die Verschlußdüse 18 mit einer in der Formebene angeordneten Ausstoßöffnung 23 verbunden. Die Andrückzylinder 21 liegen bei dieser Anordnung parallel zum Massezylinder 12 und verbinden den vorderen Spritzaggregatschlitten 16 mit der den Umlenkkanal 19 aufnehmenden Kanalplatte 20. Diese ist fest mit der feststehenden Formaufspannplatte 3 verbunden, wobei zwischen der Kanalplatte 20 und der Formaufspannplatte 3 eine Asbestplatte 24 zur Wärmeisolierung gelegt ist. Die Kanalplatte 20 ist in diesem Fall ebenso wie die Formaufspannplatte 3 mit fluchtenden Ausnehmungen zur Aufnahme einer Spritzgießformhälfte versehen.

PATENTANSPRÜCHE:

1. Spritzgießmaschine mit einer Spritzeinheit und einer waagerecht angeordneten Schließeinheit, dadurch g e k e n n z e i c h n e t , daß die Schließeinheit (1) und die Spritzeinheit (11) übereinander angeordnet sind, wobei deren Achsen einen Winkel von 0 bis 15$^{O}$ bilden und daß die Austrittsöffnung der Spritzeinheit (11) durch einen beheizten Umlenkkanal (19) mit einer in der Formebene liegenden Ausstoßöffnung verbunden ist.

2. Spritzgießmaschine nach Anspruch 1, dadurch g e - k e n n z e i c h n e t , daß die Verschlußdüse (18) an der Formebene vorgesehen ist.

3. Spritzgießmaschine nach den Ansprüchen 1 und 2, dadurch g e k e n n z e i c h n e t , daß der beheizte Umlenkkanal (19) in einer Kanalplatte (20) untergebracht ist, die mit der feststehenden, eine der Spritzgießformhälften tragenden Formaufspannplatte (3) verbunden ist.

4. Spritzgießmaschine nach den Ansprüchen 1 bis 3, dadurch g e k e n n z e i c h n e t , daß die Spritzeinheit (11) bei waagerechter Anordnung auf einer rückwärtigen Verlängerung der Führungsholme (5) der Schließeinheit (1) abgestützt ist.

0034203

Fig.1

Fig. 2

0034203

Fig. 3

0034203

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| A | US - A - 3 077 002 (E.P. WARNKEN)<br>* Insgesamt *<br><br>---- | 1 | B 29 F 1/00 |

**RECHERCHIERTE SACHGEBIETE (Int. Cl.)**

B 29 F

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 18-05-1981 | BOLLEN |

EPA form 1503.1  06.78